(19) Europäisches Patentamt
European Patent Office
Office européen des brevets

(11) Veröffentlichungsnummer: **0 038 485**
**B1**

(12) # EUROPÄISCHE PATENTSCHRIFT

(45) Veröffentlichungstag der Patentschrift: **23.11.83**

(51) Int. Cl.³: **C 09 C 1/36,** C 09 C 3/08

(21) Anmeldenummer: **81102718.4**

(22) Anmeldetag: **10.04.81**

(54) **Anorganische Pigmente mit verbesserter optischer Leistungsfähigkeit.**

(30) Priorität: **22.04.80 DE 3015438**

(43) Veröffentlichungstag der Anmeldung: **28.10.81 Patentblatt 81/43**

(45) Bekanntmachung des Hinweises auf die Patenterteilung: **23.11.83 Patentblatt 83/47**

(84) Benannte Vertragsstaaten: **BE DE FR GB IT NL**

(56) Entgegenhaltungen:
**CH - A - 459 426**
**FR - A - 1 491 740**
**FR - A - 2 401 204**

**DERWENT JAPANESE PATENT REPORT, Band U, Nr. 48, veröffentlicht am 31. Dezember 1973, (Derwent Publications), Section G, Seite 2, Zusammenfassung 73860U London, G.B.**

(73) Patentinhaber: **BAYER AG, Zentralbereich Patente, Marken und Lizenzen, D-5090 Leverkusen 1, Bayerwerk (DE)**

(72) Erfinder: **Köhler, Klaus, Dr., Friedrich-Ebert-Strasse 299, D-4150 Krefeld (DE)**
Erfinder: **Woditsch, Peter, Dr., Deswatinesstrasse 83, D-4150 Krefeld (DE)**
Erfinder: **Mattauch, Harald, Dr., Deswatinesstrasse 66, D-4150 Krefeld (DE)**
Erfinder: **Schnalke, Karl-Erwin, Dr., Paul-Klee-Strasse 89, D-5090 Leverkusen (DE)**
Erfinder: **Rieck, Hilmar, Dr., Doerperhofstrasse 15, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Anorganische Pigmente mit verbesserter optischer Leistungsfähigkeit

Gegenstand der vorliegenden Erfindung sind anorganische Pigmente, deren optische Leistungsfähigkeit in Lackbindemitteln durch eine Behandlung mit organischen Hilfsmitteln vor oder während einer abschliessenden Mikronisierung verbessert wurde.

Neben anderen Eigenschaften, wie z.B. guter Wetterbeständigkeit oder stippenfreier Zerteilbarkeit bei der Einarbeitung in Lackbindemitteln, ist eine hohe optische Leistungsfähigkeit eine wichtige Forderung, die an hochwertige Pigmente gestellt wird. Die optische Leistungsfähigkeit eines in einem Bindemittel dispergierten Pigmentes ist deshalb von so grosser Bedeutung, weil sie die Ergiebigkeit dieses Beschichtungsmaterials bestimmt.

Als Mass für die optische Leistungsfähigkeit eines anorganischen Pigmentes dient u.a. das relative Streuvermögen, welches das Streuvermögen eines unbekannten Pigmentes mit dem eines Bezugspigmentes vergleicht.

Es ist demnach das Ziel der vorliegenden Erfindung, Pigmente zu schaffen, die nach Einarbeitung in ein Lackbindemittel ein hohes relatives Streuvermögen aufweisen.

Die Bestimmung des relativen Streuvermögens erfolgt dabei nach der in der DIN 53 165 festgehaltenen Vorschrift, die auch als sogenanntes Graupastenverfahren bekannt geworden ist.

Es entspricht heute dem Stand der Technik, anorganische Pigmente organisch zu behandeln und so ihre Oberfläche zu modifizieren, damit sie eine gute Verträglichkeit mit organischen Bindemittelsystemen aufweisen. Insbesondere soll durch derartige Massnahmen die Zerteilbarkeit bei der Einarbeitung in Lackbindemittel gefördert werden, so dass man stippenfreie und hochglänzende Beschichtungen erhält. Üblicherweise wird dabei das organische Hilfsmittel vor oder während einer den Produktionsprozess abschliessenden Behandlung dem Pigment zugesetzt. Dies geschieht während der Pigmentzerkleinerung in Stift-, Kugel- oder Pendelmühlen. Besonders hochwertige Pigmente werden durch Mikronisierung in sogenannten Strahlmühlen, z.B. Luftstrahl- oder Dampfstrahlmühlen, erhalten.

Als organische Hilfsmittel zur Oberflächenmodifizierung ist eine Vielzahl von Verbindungen bekannt. Neben Organosiliciumverbindungen, Polyolen, Alkenoxiden, Phenolen, langkettigen Fettalkoholen und Fettsäureestern werden auch Alkanolamine zur organischen Behandlung von Pigmenten vorgeschlagen.

So ist z.B. in der US-Patentschrift Nr. 3345187 die Verwendung von Trialkanolaminen beschrieben, in der deutschen Patentschrift Nr. 2442678 die von Diisopropanolaminen.

Nach der Verfahrensweise der DOS Nr. 1792022 wird Triäthanolamin während des Ablaufs einer sogenannten doppelten Dampfstrahlmahlung mit der Pigmentoberfläche in Kontakt gebracht. Es ist auch bekannt, Salze von Alkanolaminen mit organischen Säuren, wie z.B. Milchsäure (DE-PS Nr. 1271862) oder Benzoesäure (US-PS Nr. 3172772) zu verwenden.

Diese vorgeschlagenen Massnahmen sind aber entweder technisch aufwendig und kostspielig, oder die resultierenden Pigmente genügen trotz deutlicher Fortschritte gegenüber organisch unbehandelten anorganischen Pigmenten nicht den höchsten Qualitätsansprüchen, die hinsichtlich des Streuvermögens gestellt werden, insbesondere bei mit $SiO_2$ und $Al_2O_3$ nachbehandelten Pigmenten.

Überraschenderweise wurde nun gefunden, dass sich anorganische Pigmente mit einem verbesserten Streuvermögen in einfacher Weise durch eine Behandlung mit α,ω-Bisaminoalkylcarbinolen vor oder während einer abschliessenden Mikronisierung herstellen lassen.

Die vorliegende Erfindung betrifft demnach anorganische Pigmente mit verbessertem Streuvermögen mit einer Beschichtung aus 0,1 bis 4 Gew.-%, vorzugsweise 0,2 bis 1 Gew.-%, bezogen auf das Gewicht des Pigmentes, an α,ω-Bisaminoalkylcarbinolen der allgemeinen Formel

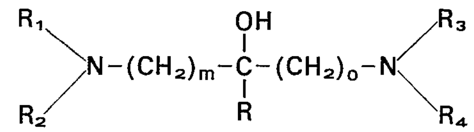

wobei

m und o jeweils Werte von 1 bis 3 annehmen können,

R Wasserstoff oder ein $C_1$-$C_3$-Alkylrest ist,

$R_1$, $R_2$, $R_3$, $R_4$ gleiche oder verschiedene $C_1$-$C_5$-Reste sein können, auch eine Verknüpfung von $R_1$ und $R_2$ sowie $R_3$ und $R_4$ durch gegebenenfalls Heteroatome aufweisende Kohlenwasserstoffketten möglich ist

sowie ein Verfahren zu deren Herstellung durch Beschichtung der Pigmente vor oder während der abschliessenden Mikronisierung mit den vorgenannten Verbindungen, wobei Weisspigmente auf Basis von $TiO_2$ oder Titanaten, die gegebenenfalls anorganisch nachbehandelt wurden, bevorzugt geeignet sind.

Die neuen Pigmente eignen sich insbesondere zur Pigmentierung von Lackbindemitteln.

Die Pigmente werden mit 0,1 bis 4%, vorzugsweise 0,2 bis 1% der organischen Hilfsmittel in Kontakt gebracht. Bevorzugte α,ω-Bisaminoalkylcarbinole stellen dabei die 1,3-Diamino-2-propanole der Formel

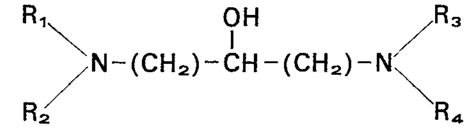

wobei

$R_1$, $R_2$, $R_3$, $R_4$ gleiche oder verschiedene $C_1$-$C_5$-Reste sein können, auch eine Verknüpfung von $R_1$ und $R_2$ sowie $R_3$ und $R_4$ durch gegebenenfalls

Heteroatome aufweisende Kohlenwasserstoffketten möglich ist.

Besonders bevorzugt ist dabei das 1,3-Bisdimethylamino-2-propanol.

Die Art der Zugabe des Hilfsmittels zum Pigment ist an sich bekannt. Es ist gleichgültig, ob es den bei der Pigmentherstellung anfallenden feuchten Filterkuchen, Pasten oder Aufschlämmungen vor der Trocknung zugemischt wird, oder ob es unmittelbar vor der abschliessenden Mahlung dem getrockneten Aufgabegut in geeigneter Weise, beispielsweise durch Aufsprühen oder Auftropfen, zugegeben wird. Im Falle einer Dampfstrahlmahlung kann est unmittelbar bei der Einspeisung in die Strahlmühle zugesetzt werden.

Dem Verfahren sind alle anorganischen Pigmente zugänglich. Besonders vorteilhafte Ergebnisse wurden mit Weisspigmenten auf Basis von $TiO_2$ oder Titanaten erzielt. Die Pigmente können gegebenenfalls einer anorganischen Nachbehandlung unterworfen worden sein. Man erhält nach dem erfindungsgemässen Verfahren Pigmente mit hervorragendem Streuvermögen.

Entsprechend der Erfindung können sowohl nach dem Sulfatverfahren als auch nach dem $TiCl_4$-Verbrennungsverfahren hergestellte $TiO_2$-Pigmente der Rutil- oder Anatasform behandelt werden.

Die Oberflächenbehandlung von anorganisch nachbehandelten $TiO_2$-Pigmenten mit dem erfindungsgemässen organischen Hilfsstoff sei im folgenden ausführlich beschrieben.

Nach mehreren Vorstufen fällt z.B. ein sogenannter Ofenklinker an, welcher gemahlen und klassiert wird. Das Feingut wird einer anorganischen Nachbehandlung, die im Auffällen von z.B. $Al(OH)_3$, $SiO_2$, $TiO_2$ bestehen kann, unterzogen. Dies kann in einer Suspension nach verschiedenen Verfahrensvarianten erfolgen. Danach wird der anorganisch nachbehandelte Pigmentschlamm über ein Drehfilter entwässert und dabei gewaschen. Das Filtergut dieses ersten Drehfilters kann wieder mit Wasser angemischt und einem zweiten Drehfilter zugeführt werden. Das Drehfiltergut II wird nochmals gewaschen und dann getrocknet, wobei als Trocknungsaggregate Bandtrockner oder Sprühtrocknungseinrichtungen dienen. Es erfolgt die Zerkleinerung der Pigmente durch Mahlung entweder in verdichtenden Mahlaggregaten wie Raymond-, Kugel- oder Hammermühlen oder in einer Strahlmühle, z.B. einer Luftstrahlmühle oder einer Dampfstrahlmühle. Das erfindungsgemässe organische Hilfsmittel kann mit dem Pigment an verschiedenen Punkten vor oder während der Mikronisierung in Kontakt gebracht werden. Beispielsweise kann es dem Drehfiltergut II nach der Waschung und vor der Trocknung zugemischt werden. Es kann auch dem getrockneten Gut unmittelbar vor der Mikronisierung, z.B. durch Besprühen, zugesetzt werden. Eine andere Behandlungsart besteht in der Zugabe der erfindungsgemäss einzusetzenden Verbindungen zu dem Dampf oder der Luft bei der Einspeisung in die Strahlmühle. Es ist also möglich, den Hilfsstoff an verschiedenen Punkten des Herstellungsprozesses dem Pigment zuzugeben.

Die Prüfung des relativen Streuvermögens der erfindungsgemässen Pigmente erfolgt nach der DIN 53 165, die auch als sogenanntes Graupastenverfahren bekannt ist. Alle Pigmente werden einheitlich bei einer Pigmentvolumenkonzentration (PVK) von 15 Vol.-% geprüft. Als Bezugspigment dient der anorganisch nachbehandelte Rutilpigment Bayertitan R-KB-2®. Es werden keine von dieser Norm abweichenden Prüfbedingungen angewandt.

Nachfolgend wird die Herstellung der erfindungsgemässen Pigmente beispielhaft beschrieben.

*Beispiel 1:*

Ein nach dem Sulfatverfahren hergestelltes $TiO_2$-Pigment mit Rutilstruktur, das im folgenden als Pigment A bezeichnet wird, wurde mit 0,8% $SiO_2$ und 2,5% $Al_2O_3$ anorganisch nachbehandelt und nach den üblichen Wasch- und Filtrationsschritten getrocknet. Das Pigment wird mit 0,4% 1,3-Bisdimethylamino-2-propanol besprüht und in einer mit überhitztem Wasserdampf betriebenen Strahlmühle mikronisiert. Die Bestimmung des relativen Streuvermögens gegen ein Standardpigment (Bayertitan R-KB-2®) ergab einen Wert von Sr = 108.

*Vergleichsbeispiel A:*

Das gleiche Ausgangsmaterial entsprechend Beispiel 1 wird mit 0,4% eines herkömmlichen organischen Hilfsmittels, dem Reaktionsprodukt aus Trimethylolpropan plus 3,5 mol Äthylenoxid (s. Beispiel 7a DOS Nr. 1467442) besprüht und unter gleichen Bedingungen wie in Beispiel 1 mikronisiert. Die Bestimmung des relativen Streuvermögens gegen Bayertitan R-KB-2® ergab einen Wert von Sr = 97. Daraus ergibt sich, dass die Verwendung von 1,3-Bisdimethylamino-2-propanol unter sonst gleichen Herstellungsbedingungen eine Steigerung des relativen Streuvermögens um 11 Punkte gegenüber einem herkömmlichen organischen Hilfsmittel bewirkt.

*Beispiel 2:*

Das Ausgangsmaterial entsprechend Beispiel 1 wird mit 0,6% 1,3-Bisdimethylamino-2-propanol besprüht und entsprechend Beispiel 1 mikronisiert. Das relative Streuvermögen ergibt einen Wert von Sr = 108.

*Vergleichsbeispiel B:*

Das Ausgangsmaterial entsprechend Beispiel 1 wird mit 0,6% des herkömmlichen Hilfsmittels des Vergleichsbeispiels A besprüht und entsprechend Beispiel 1 mikronisiert. Das relative Streuvermögen ergab einen Wert von Sr = 96.

Aus Beispiel 2 und Vergleichsbeispiel B geht hervor, dass auch bei veränderter Hilfsmittelmenge die Verwendung von 1,3-Bisdimethylamino-2-propanol vorteilhaft ist.

*Beispiel 3:*

Das Ausgangsmaterial entsprechend Beispiel 1 wird mit 0,4% 1,3-Bisdimethylamino-2-propanol besprüht und einer weniger intensiven Mikronisierung als in Beispiel 1 unterzogen. Das relative Streuvermögen lag bei Sr = 100.

*Vergleichsbeispiel C:*

Das Ausgangsmaterial entsprechend Beispiel 1 wird mit 0,4% des herkömmlichen Hilfsmittels des Vergleichsbeispiels A besprüht und entsprechend Beispiel 3 mikronisiert. Es ergibt sich ein relatives Streuvermögen von Sr = 84.

Durch Beispiel 3 und Vergleichsbeispiel C wird gezeigt, dass es auch unter anderen Mikronisierungsbedingungen vorteilhaft für das relative Streuvermögen ist, das Pigment mit 1,3-Bisdimethylamino-2-propanol zu beschichten.

*Beispiel 4:*

Ein nach dem Sulfatverfahren hergestelltes $TiO_2$-Pigment mit Rutilstruktur, das im folgenden als Pigment B bezeichnet wird, und das sich vom Pigment A durch die Bedingungen unterscheidet, mit denen die sogenannte Kalzination des Pigmentes durchgeführt wird, wurde mit 0,8% $SiO_2$ und 2,2% $Al_2O_3$ anorganisch nachbehandelt und nach den üblichen Wasch- und Filtrationsschritten getrocknet. Das Pigment wird mit 0,5% 1,3-Bisdimethlamino-2-propanol besprüht und entsprechend Beispiel 1 mikronisiert. Es wird ein relatives Streuvermögen von Sr = 108 gefunden.

*Vergleichsbeispiel D:*

Das Ausgangsmaterial des Beispiels 4 wird anstelle von 1,3-Bisdimethylamino-2-propanol mit 0,5% des herkömmlichen organischen Hilfsmittels des Vergleichsbeispiels A besprüht und entsprechend Beispiel 4 mikronisiert. Das relative Streuvermögen ergibt einen Wert von Sr = 101.

Durch Beispiel 4 und Vergleichsbeispiel D wird belegt, dass die Vorteile des 1,3-Bisdimethylamino-2-propanols auch bei veränderten Ausgangsmaterialien zum Tragen kommen.

*Beispiel 5:*

Das Pigment B des Beispiels 4 wird einer anorganischen Nachbehandlung entsprechend Beispiel 4 unterzogen, wobei es während der anorganischen Nachbehandlung einer zusätzlichen Nassmahlung in wässeriger Suspension unterzogen wird. Nach Abschluss der anorganischen Nachbehandlung wird in üblicher Weise gewaschen, filtriert und dann getrocknet. Das Pigment wird mit 0,5% 1,3-Bisdimethylamino-2-propanol besprüht und entsprechend Beispiel 4 mikronisiert. Das Pigment weist ein relatives Streuvermögen von Sr = 112 auf.

*Vergleichsbeispiel E:*

Das Ausgangsmaterial entsprechend Beispiel 5 wird anstelle von 1,3-Bisdimethylamino-2-propanol mit 0,5% des herkömmlichen organischen Hilfsmittels des Vergleichsbeispiels A besprüht und entsprechend Beispiel 5 mikronisiert. Das Pigment zeigt ein relatives Streuvermögen von Sr = 102.

Durch Beispiel 5 und Vergleichsbeispiel E wird gezeigt, dass auch bei einem zusätzlichen Mahlschritt die Vorteile des 1,3-Bisdimethylamino-2-propanols gegenüber einem herkömmlichen organischen Hilfsmittel erhalten bleiben.

## Patentansprüche

1. Anorganische Pigmente mit verbessertem Streuvermögen mit einer Beschichtung aus 0,1 bis 4 Gew.-%, vorzugsweise 0,2 bis 1 Gew.-%, bezogen auf das Gewicht des Pigmentes, an α,ω-Bisaminoalkylcarbinolen der allgemeinen Formel

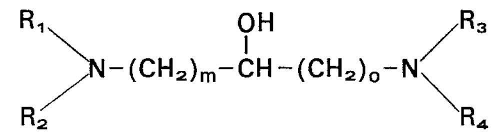

wobei
m und o jeweils Werte von 1 bis 3 annehmen können,
R Wasserstoff oder ein $C_1$-$C_3$-Alkylrest ist,
$R_1$, $R_2$, $R_3$, $R_4$ gleiche oder verschiedene $C_1$-$C_5$-Reste sein können, auch eine Verknüpfung von $R_1$ und $R_2$ sowie $R_3$ und $R_4$ durch gegebenenfalls Heteroatome aufweisende Kohlenwasserstoffketten möglich ist.

2. Anorganische Pigmente gemäss Anspruch 1, dadurch gekennzeichnet, dass das Pigment ein Weisspigment auf Basis von $TiO_2$ oder Titanaten ist und gegebenenfalls anorganisch nachbehandelt wurde.

3. Anorganische Pigmente gemäss einem der beiden Ansprüche 1 oder 2, dadurch gekennzeichnet, dass die α,ω-Bisaminoalkylcarbinole 1,3-Diamino-2-propanol der Formel

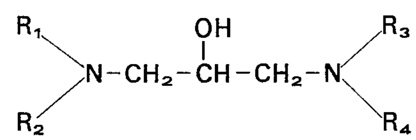

sind, wobei
$R_1$, $R_2$, $R_3$, $R_4$ gleiche oder verschiedene $C_1$-$C_5$-Reste sein können, auch eine Verknüpfung von $R_1$ und $R_2$ sowie $R_3$ und $R_4$ durch gegebenenfalls Heteroatome aufweisende Kohlenwasserstoffketten möglich ist.

4. Anorganische Pigmente gemäss einem der Ansprüche 1 bis 3, dadurch gekennzeichnet, dass das α,ω-Bisaminoalkylcarbinol ein 1,3-Bisdimethylamino-2-propanol ist.

5. Verfahren zur Herstellung anorganischer Pigmente gemäss einem der Ansprüche 1 bis 4, dadurch gekennzeichnet, dass ein oder mehrere α,ω-Diaminoalkylcarbinole vor oder während der abschliessenden Mikronisierung zugesetzt werden.

6. Verfahren zur Herstellung anorganischer Pigmente gemäss Anspruch 5, dadurch gekennzeichnet, dass das mikronisierte Pigment während

einer anorganischen Nachbehandlung einer zusätzlichen Nassmahlung unterzogen wird.

7. Verwendung der anorganischen Pigmente gemäss einem der Ansprüche 1 bis 6 zur Pigmentierung von Lackbindemitteln.

## Claims

1. Inorganic pigments with improved scattering power and having a coating of 0.1 to 4% by weight, preferably 0.2 to 1% by weight, based on the weight of the pigment, of α,ω-bis-aminoalkyl carbinols of the general formula:

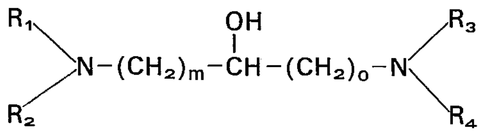

wherein:
m and o can each have values of 1 to 3,
R is hydrogen or a $C_1$-$C_3$-alkyl radical, and
$R_1$, $R_2$, $R_3$ and $R_4$ can be identical or different $C_1$-$C_5$ radicals, a linkage between $R_1$ and $R_2$ and between $R_3$ and $R_4$ by hydrocarbon chains optionally containing hetero-atoms also being possible.

2. Inorganic pigments according to claim 1, characterised in that the pigment is a white pigment based on $TiO_2$ or titanates and has optionally been inorganically after-treated.

3. Inorganic pigments according to one of claims 1 or 2, characterised in that the α,ω-bis-aminoalkyl carbinols are 1,3-diamino-2-propanols of the formula:

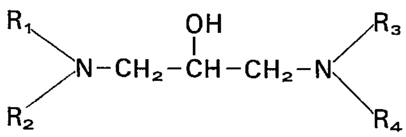

wherein:
$R_1$, $R_2$, $R_3$ and $R_4$ can be identical or different $C_1$-$C_5$ radicals, a linkage between $R_1$ and $R_2$ and between $R_3$ and $R_4$ by hydrocarbon chains optionally containing hetero-atoms also being possible.

4. Inorganic pigments according to one of claims 1 to 3, characterised in that the α,ω-bis-aminoalkyl carbinol is a 1,3-bis-dimethylamino-2-propanol.

5. Process for the preparation of inorganic pigments according to one of claims 1 to 4, characterised in that one or more α,ω-diaminoalkyl carbinols are added before or during the final micronisation.

6. Process for the preparation of inorganic pigments according to claim 5, characterised in that the micronised pigment is subjected to additional wet grinding during an inorganic aftertreatment.

7. Use of the inorganic pigments according to one of claims 1 to 6 for pigmenting lacquer binders.

## Revendications

1. Pigments inorganiques ayant un pouvoir dispersant amélioré avec un enduit constitué de 0,1 à 4% en poids, de préférence de 0,2 à 1% en poids (calculé sur le poids du pigment), d'α,ω-bis-aminoalkylcarbinols de formule générale:

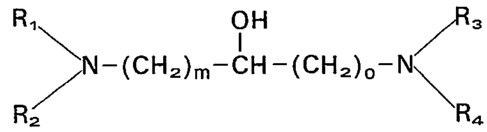

dans laquelle:
m et o peuvent prendre chacun des valeurs de 1 à 3,
R représente un atome d'hydrogène ou un groupe alkyle en $C_1$-$C_3$,
$R_1$, $R_2$, $R_3$ et $R_4$ peuvent être des radicaux en $C_1$-$C_5$ identiques ou différents, $R_1$ et $R_2$, ainsi que $R_3$ et $R_4$, pouvant être reliés par des chaînes d'hydrocarbures comportant éventuellement des hétéroatomes.

2. Pigments inorganiques suivant la revendication 1, caractérisés en ce que le pigment est un pigment blanc à base de $TiO_2$ ou de titanates que l'on a éventuellement soumis à un traitement ultérieur inorganique.

3. Pigments inorganiques suivant l'une des revendications 1 ou 2, caractérisés en ce que les α,ω-bis-aminoalkylcarbinols sont des 1,3-diamino-2-propanols de formule:

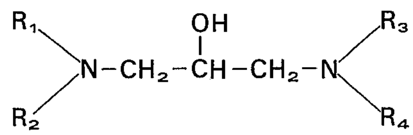

dans laquelle:
$R_1$, $R_2$, $R_3$ et $R_4$ peuvent être des radicaux en $C_1$-$C_5$ identiques ou différents, $R_1$ et $R_2$, ainsi que $R_3$ et $R_4$, pouvant être reliés par des chaînes d'hydrocarbures comportant éventuellement des hétéroatomes.

4. Pigments inorganiques suivant l'une des revendications 1 à 3, caractérisés en ce que l'α,ω-bis-aminoalkylcarbinol est un 1,3-bis-diméthylamino-2-propanol.

5. Procédé de préparation de pigments inorganiques suivant l'une des revendications 1 à 4, caractérisé en ce qu'on ajoute un ou plusieurs α,ω-diaminoalkylcarbinols avant ou pendant la micronisation finale.

6. Procédé de préparation de pigments inorganiques suivant la revendication 5, caractérisé en ce que, pendant un traitement ultérieur inorganique, on soumet le pigment micronisé à un broyage supplémentaire par voie humide.

7. Utilisation des pigments inorganiques suivant l'une des revendications 1 à 6 pour la pigmentation d'agents liants pour vernis.